# DEMANDE DE BREVET EUROPEEN

(11) **EP 0 739 122 A1**
(43) Date de publication de la demande: **23.10.1996**
(21) Numéro de dépôt: 96400818.9
(22) Date de dépôt: 17.04.1996
(51) Int. Cl.: H04M 1/65

(54) **Procédé et dispositif de contrôle de la sauvegarde de l'enregistrement d'un message téléphoné pour appareillage doté d'une fonction de répondeur et appareillage doté d'un tel dispositif**

(30) Priorité: 19.04.1995 FR 9504641
(71) Demandeur: ALCATEL BUSINESS SYSTEMS, F-75008 Paris (FR)
(72) Inventeur: Blanchard, Philippe, 60430 Saint Sulpice (FR)
(74) Mandataire: Schaub, Bernard

(57) **Abrégé**

Procédé et dispositif de contrôle de la sauvegarde de l'enregistrement d'un message téléphoné pour appareillage doté d'une fonction de répondeur, en cas d'intervention d'un utilisateur de l'appareillage pour entrer en communication avec un correspondant, ayant préalablement appelé, alors que l'appareillage a émis un signal indiquant le début d'une phase d'enregistrement au profit du correspondant.
Le procédé prévoit une phase de surveillance, déclenchée à partir de l'instant d'intervention d'un utilisateur, pour déterminer s'il y a interruption de la communication avant écoulement d'un temps correspondant à une valeur de référence et pour n'effectuer un stockage permanent des signaux reçus du correspondant, jusqu'à l'interruption, que si cette dernière intervient dans un temps au plus égal à une valeur de référence, après l'intervention.
Le dispositif comporte des moyens logiciels et/ou matériels pour la mise en oeuvre du procédé.

## Description

L'invention concerne un procédé et un dispositif pour le contrôle de la sauvegarde d'un message téléphoné par un correspondant et en cours de réception pour enregistrement par un appareillage doté d'une fonction de répondeur, ainsi que les appareillages dotés d'un tel dispositif.

Comme il est connu, il existe divers appareillages susceptibles de disposer d'une fonction de répondeur, ce qui permet à leurs utilisateurs d'enregistrer des messages destinés à être diffusés aux correspondants qui les appellent par voie téléphonique et/ou radio-téléphonique, lorsqu'il n'y a pas intervention au niveau de l'appareillage par l'abonné ou par un autre utilisateur local pour répondre à l'appel.

Les correspondants, lorsqu'ils appellent un abonné doté d'un tel appareillage, peuvent faire enregistrer par ce dernier un message qu'ils transmettent téléphoniquement ou radio-téléphoniquement, suite à un message d'invite pré-enregistré transmis par cet appareillage, lorsqu'il n'y a pas eu intervention de l'abonné ou d'un utilisateur local pour répondre.

Comme il est connu de tels appareillages sont notamment susceptibles d'être constitués soit sous la forme d'une association d'un appareil répondeur et d'un appareil téléphonique, simple ou multifonctions, interconnectés, soit sous la forme d'un appareil téléphonique dans lequel est intégré un répondeur, soit encore sous la forme d'un ordinateur multimédia muni de moyens permettant la communication téléphonique et le fonctionnement en répondeur. Bien entendu, il est possible de réaliser des appareillages équivalents destinés à fonctionner avec des moyens de communication de type radio-téléphonique.

Il est classique de trouver des répondeurs qui permettent à leurs utilisateurs d'écouter les messages provenant des correspondants appelants, lorsque ces messages sont en cours de réception. Ces répondeurs permettent à l'abonné, ou à un utilisateur local, qui le désire, d'intervenir pour entrer en communication avec un correspondant ayant appelé, alors que ce dernier est en train de faire enregistrer un message sur le répondeur, suite à la transmission d'un message d'invite par ce dernier.

L'enregistrement d'un message en cours de réception est habituellement interrompu par l'intervention et il n'est normalement pas prévu de sauvegarder ce qui a déjà été enregistré, car cette sauvegarde est le plus souvent inutile en raison de l'établissement de la communication téléphonique qui était recherchée par le correspondant appelant.

Ceci peut présenter toutefois un sérieux inconvénient lorsque l'intervention de l'abonné ou d'un utilisateur s'effectue, alors que le correspondant met fin à la communication après avoir terminé son message. En l'absence de précaution particulière, le message n'est alors pas sauvegardé et ce bien que la communication directe recherchée par le correspondant appelant n'ait pas été réellement établie. Le correspondant n'a pas de raison de penser que son message n'a pas été enregistré, alors que ce dernier ne peut pas être restitué par l'appareillage qui l'a reçu.

Pour remédier à cet inconvénient, l'invention propose donc un procédé de contrôle de la sauvegarde de l'enregistrement d'un message téléphoné ou radiotéléphoné pour appareillage doté d'une fonction de répondeur, en cas d'intervention d'un utilisateur de l'appareillage pour entrer en communication avec un correspondant, ayant préalablement appelé l'appareillage, après une émission par cet appareillage d'un signal caractéristique d'invite signalant le début d'une phase d'enregistrement au profit dudit correspondant.

Selon une caractéristique de l'invention, ce procédé comporte une phase de surveillance, déclenchée à partir de l'instant d'intervention d'un utilisateur de l'appareillage en vue d'entrer en communication avec le correspondant, pour déterminer s'il y a interruption de la communication avant écoulement d'un temps déterminé correspondant à une valeur de référence fixée et pour en conséquence n'effectuer ou éventuellement ne valider un stockage permanent des signaux reçus du correspondant par l'appareillage, après l'émission du signal d'invite par cet appareillage et jusqu'à l'interruption de la communication, que si cette interruption intervient dans un temps inférieur ou au plus égal à la valeur de référence "T", après l'intervention d'un utilisateur.

L'invention propose aussi un dispositif pour le contrôle de la sauvegarde d'un message téléphoné ou radio-téléphoné par un correspondant et en cours de réception pour enregistrement par un appareillage doté d'une fonction de répondeur, en cas d'intervention d'un utilisateur de l'appareillage pour entrer en communication avec le correspondant, après une émission par l'appareillage d'un signal d'invite destiné à signaler le début d'une phase d'enregistrement au correspondant, au profit de ce dernier, et avant une interruption de la communication établie entre ce correspondant et l'appareillage.

Selon une caractéristique de l'invention, ce dispositif comporte des moyens logiciels et/ou matériels pour commander une mesure de temps, à partir de l'instant d'une intervention d'un utilisateur de l'appareillage en vue d'entrer en communication avec le correspondant ayant appelé et pour commander la sauvegarde, dans un agencement de stockage, du message constitué par les signaux reçus de ce correspondant par l'appareillage, après l'émission d'un signal d'invite par ce dernier et jusqu'à l'interruption de la communication, si cette interruption intervient dans un délai inférieur ou au plus égal à une valeur de référence fixée, après l'instant d'intervention de l'utilisateur.

L'invention concerne encore les appareillages individuellement dotés d'une fonction de répondeur qui comportent un dispositif tel que défini ci-dessus. L'invention concerne enfin les appareillages individuellement dotés d'une fonction de répondeur qui sont reliés chacun à une ligne téléphonique et qui selon une caractéristique de l'invention comportent chacun un dispositif pour le contrôle de la sauvegarde de message exploitant:
- des moyens logiciels et/ou matériels pour détecter l'envoi d'un signal d'invite, l'intervention d'un utilisateur par prise de la ligne téléphonique, au cours d'une communication entre l'appareillage et un correspondant ayant appelé par l'intermédiaire de la ligne téléphonique, et l'interruption d'une communication téléphonique établie par l'intermédiaire de cette même ligne téléphonique;
- des moyens pour comparer à une valeur de référence le temps s'écoulant entre une intervention par prise de ligne au niveau de l'appareillage, après l'émission d'un signal d'invite par cet appareillage sur la ligne téléphonique, et une interruption de la communication alors établie via cette ligne téléphonique;
- des moyens pour intervenir sur l'enregistrement, dans un agencement de stockage de l'appareillage, des signaux reçus par l'appareillage, via la ligne téléphonique, après une émission par cet appareillage d'un signal d'invite et jusqu'à interruption de la communication jusqu'alors établie via cette ligne.

L'invention, ses caractéristiques et ses avantages sont précisés dans la description qui suit en liaison avec les figures évoquées ci-dessous.

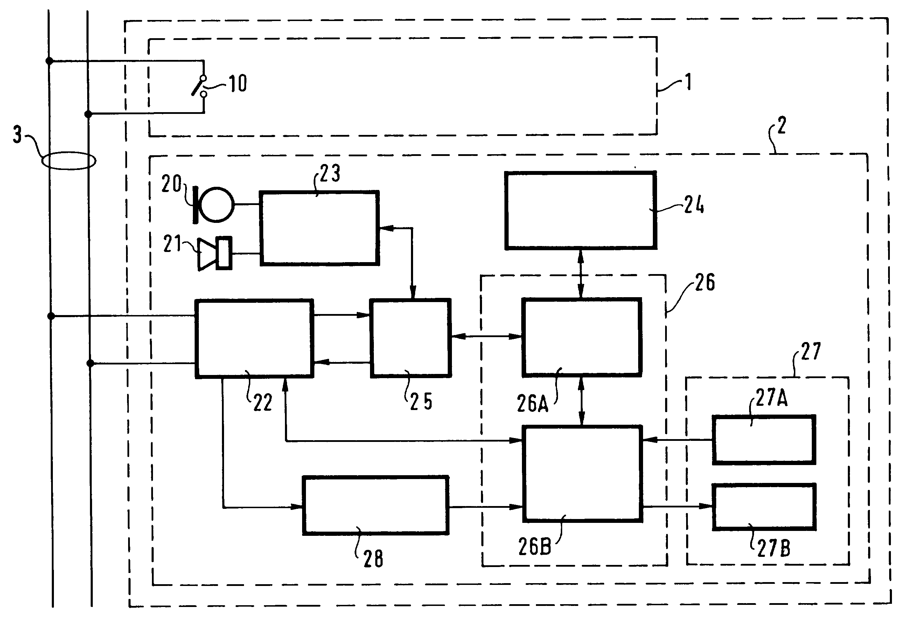

La figure unique présente un schéma de principe d'un exemple d'appareillage doté d'une fonction de répondeur.

L'exemple d'appareillage doté d'une fonction de répondeur et référencé 0 qui est présenté en figure unique correspond au cas où cet appareillage comporte un appareil téléphonique 1 et un appareil répondeur téléphonique 2 connectés en parallèle aux fils d'une ligne téléphonique 3. Il doit être compris que, comme indiqué plus haut, d'autres formes de réalisation sont envisageables et en particulier qu'un appareil unique peut éventuellement combiner les fonctions respectivement assurées par les deux appareils 2 et 3 évoqués.

L'appareil téléphonique 1, envisagé en liaison avec la figure unique, est susceptible d'être un simple poste d'un type courant, ce peut aussi être un terminal, éventuellement multiservice, permettant l'établissement de communications téléphoniques sous forme vocale. Il comporte un organe de commutation 10, ici symbolisé par un contact, qui lui permet de se connecter sur commande à la ligne téléphonique 3 pour répondre à un appel qui lui est transmis par cette ligne depuis un central téléphonique, non représenté, auquel il est rattaché ou pour établir une communication avec un autre appareil téléphonique par l'intermédiaire de ce central.

Dans une forme connue de réalisation, l'appareil téléphonique 1 est alimenté en courant continu par le central, dès que l'organe de commutation 10 a été actionné et il insère alors une impédance de valeur limitée, déterminée entre les fils de la ligne téléphonique 3.

L'appareil répondeur 2 est destiné à se substituer à l'appareil téléphonique 1, lorsque ce dernier ne répond pas à un appel entrant dans un court laps de temps prédéterminé, il est donc lui aussi apte à insérer une impédance limitée et déterminée entre les fils de la ligne téléphonique 3.

Comme connu, il permet d'enregistrer des messages vocaux qu'il reçoit soit localement sous forme sonore par l'intermédiaire d'un microphone 20, soit par voie téléphonique par l'intermédiaire de la ligne téléphonique 3.

Il permet aussi la restitution des messages vocaux qu'il a enregistrés ou éventuellement qu'il est en train de recevoir. La restitution des messages reçus et/ou enregistrés peut être locale et sous forme sonore, par exemple par l'intermédiaire d'un haut-parleur 21, elle peut aussi s'effectuer sous forme de signaux transmissibles par voie téléphonique, via la ligne 3.

Un circuit d'interface de ligne 22, analogue à celui que comporte un appareil téléphonique, est incorporé dans le répondeur 2 pour permettre le raccordement de ce dernier à la ligne téléphonique 3 et son fonctionnement à la place de l'appareil 1 pour émettre et recevoir des messages.

Le circuit d'interface de ligne 22 est relié à l'équipement audio, ici symbolisé par le microphone 20, par le haut-parleur 21 et par des moyens amplificateurs 23, ainsi qu'à un agencement de stockage de messages 24.

L'équipement audio et l'agencement de stockage de messages 23 sont ici supposés reliés au circuit d'interface de ligne 22 par l'intermédiaire d'un convertisseur 25 de type analogique-numérique bidirectionnel. Ce convertisseur transforme les signaux constituant les messages qui sont ici supposés transmis sous forme analogique et qui proviennent de la ligne téléphonique ou du microphone en signaux numériques à destination de l'agencement de stockage de messages 24. Il permet aussi une transformation inverse des signaux numériques constituant les messages enregistrés par cet agencement en signaux analogiques, lorsque ces signaux numériques doivent être restitués pour transmission par voie téléphonique, via le circuit d'interface de ligne 22, ou pour transcodage local sous forme sonore par l'équipement audio évoqué plus haut.

Une logique 26 est associée à l'agencement de stockage de messages 24 et au convertisseur 25, elle comporte au moins un processeur pour assurer l'enregistrement des messages et leur restitution à la demande. Dans l'exemple de réalisation où comme indiqué plus haut les messages sont stockés sous forme numérique, il est prévu d'associer un processeur de traitement de signal 26A chargé des opérations relatives à l'enregistrement et à la restitution des signaux numériques constituant les messages à un processeur 26B, chargé des opérations relatives à la gestion du répondeur.

Le processeur de traitement de signal 26A communique avec le processeur de gestion 26B et avec l'agencement de stockage de messages 24; comme il est connu ce dernier est susceptible d'être de type dynamique ou de type statique, suivant les besoins.

Le processeur de gestion 26B est relié à un agencement d'interface homme-machine 27 permettant à un utilisateur d'exploiter le répondeur 2. Cet agencement d'interface 27 comporte par exemple un clavier 27A permettant de commander le répondeur et un afficheur 27B fournissant des indications relatives au fonctionnement du répondeur sous forme visuelle, par exemple sous forme d'informations alphanumériques et/ou d'icônes.

La logique ou plus précisément le processeur de gestion 26B, dans l'exemple envisagé, comporte des moyens logiciels qui lui permettent de réaliser des opérations déterminées à la demande, les éléments de programme nécessaires à la mise en oeuvre de ces opérations étant mis à disposition du processeur de gestion 26B dans une ou des mémoires, non représentées, qui peuvent ou non être incorporées dans l'agencement de stockage de messages 24, suivant les cas.

Le processeur de gestion 26B supervise le fonctionnement du circuit d'interface de ligne 22 auquel il est ici directement relié. Il est ici supposé relié à un dispositif dit détecteur de décrochage 28 qui est plus particulièrement destiné à relever et signaler toute intervention de prise de ligne réalisée au niveau de l'appareil téléphonique 1, alors qu'une communication téléphonique est déjà établie entre l'appareil répondeur 2 et un correspondant distant ayant préalablement appelé.

Dans l'exemple de réalisation envisagé, ce dispositif détecteur de décrochage 28 est supposé inséré entre le circuit d'interface de ligne 22 et le processeur de gestion 26B de manière à détecter toute variation du courant de ligne correspondant à la connexion de l'appareil téléphonique 1 à la ligne téléphonique 3 par l'intermédiaire de l'organe de commutation 10 mis à l'état passant, lorsque le répondeur est lui-même actif.

Bien entendu, avec un appareillage 0 différent de celui schématisé sur la figure unique et en particulier dans un appareillage téléphonique qui est doté d'une fonction de répondeur et qui est réalisé sous la forme d'un appareil unique, le dispositif détecteur de décrochage peut être conçu de manière totalement différente. Un tel détecteur peut pratiquement assurer par d'autres moyens les mêmes fonctions de détection et de signalisation des interventions de prise de ligne au niveau de l'appareillage, lors d'une communication qui est établie entre cet appareillage et un correspondant distant et où est exploitée la fonction répondeur de l'appareillage. A titre d'exemple, la détection d'une intervention de prise de ligne peut être réalisée par détection électrique, magnétique ou optique du mouvement d'un organe de commutation de type touche ou crochet commutateur de combiné et par signalisation directe de cette détection à la logique gérant l'appareillage.

Quel que soit le cas, l'appareillage 0 doit comporter une logique 26 dotée de moyens logiciels, connus en eux-mêmes, qui permettent de prendre en compte divers événements susceptibles d'intervenir suite à la réception d'un appel téléphonique entrant par l'appareillage.

Comme indiqué plus haut dans la réalisation proposée en liaison avec la figure unique, c'est au niveau du processeur de gestion 26B que ces moyens sont essentiellement mis en oeuvre.

Quel que soit le cas, les événements à prendre en compte comprennent notamment la mise en action de la fonction de répondeur suite à un appel téléphonique entrant et après un délai déterminé, en l'absence d'une autre intervention de réponse à cet appel. Dans l'exemple envisagé en liaison avec la figure unique, cette mise en action de la fonction de répondeur est réalisée par l'insertion d'une impédance déterminée par l'appareil répondeur 2 aux bornes de la ligne téléphonique 3, en l'absence d'insertion d'une impédance équivalente par l'appareil téléphonique 1 dans un délai déterminé, classiquement un petit nombre de secondes. Les événements à prendre en compte comprennent aussi le début de la phase d'enregistrement de message réservée au correspondant ayant appelé. Ce début de phase se traduit par l'envoi par l'appareil répondeur 2, via la ligne téléphonique 3 et par exemple sous le contrôle du processeur de gestion 26B, d'un signal d'invite caractéristique, usuellement destiné à être converti sous forme sonore, après un message d'annonce signalant au correspondant que les signaux sonores qu'il est susceptible d'envoyer lui-même sur la ligne téléphonique se trouveront enregistrés au niveau de l'appareillage 0 qu'il a appelé.

Comme il est connu, la fin d'une phase d'enregistrement par un appareillage 0 est ordinairement déclenchée soit par une intervention du correspondant ayant appelé, si celui-ci interrompt la communication en libérant la ligne téléphonique 3, soit par la fin du laps de temps alloué à l'enregistrement d'un message par un correspondant distant au niveau de l'appareillage 0. Elle se traduit dans l'un et l'autre cas, par une libération de la ligne téléphonique soit par le correspondant ayant appelé soit par l'appareillage 0 qui a été appelé, et elle est suivie par l'envoi d'une tonalité d'occupation à celui qui n'est pas à l'origine de la libération par le central téléphonique auquel il est rattaché.

Comme indiqué plus haut, un événement également susceptible d'intervenir est la détection d'une action de prise de ligne téléphonique, au niveau de l'appareillage 0 dont la fonction de répondeur est en cours d'exploitation par un correspondant ayant appelé par l'intermédiaire de la ligne téléphonique 3. Dans l'exemple de réalisation envisagé en liaison avec la figure unique, ceci se traduit par l'envoi d'une signalisation par le dispositif détecteur de décrochage 28 au processeur de gestion 26B, lorsque l'appareil répondeur 2 est en liaison avec un correspondant ayant appelé via la ligne téléphonique 3 et que survient une connexion de l'appareil téléphonique 1 à cette ligne par mise à l'état passant de l'organe de commutation 10. Selon l'invention, un contrôle est déclenché, après qu'un signal d'invite signalant le début d'une phase d'enregistrement ait été émis à destination d'un correspondant ayant appelé un appareillage 0, pour déterminer s'il se produit une intervention au niveau de cet appareillage en vue de prendre la ligne téléphonique en cours d'utilisation, tant que la phase d'enregistrement n'a pas été interrompue dans l'une ou l'autre des conditions évoquées plus haut.

Dans l'exemple de réalisation envisagé en liaison avec la figure unique, le processeur de gestion 26B assure ce contrôle puisqu'il a connaissance tant de l'envoi du signal d'invite que produit l'appareil répondeur 2 qui le comporte que d'une éventuelle prise de ligne au niveau de l'appareil téléphonique 1 qui lui est indiquée par le dispositif détecteur de décrochage 28 relié à lui.

Lorsqu'une prise de ligne est effectuée après qu'un signal d'invite ait été émis à destination d'un correspondant ayant appelé, il est prévu de réaliser un comptage du temps "t" s'écoulant entre la prise de la ligne téléphonique 3 effectuée au niveau de l'appareillage 0 et la libération de cette ligne de manière à déterminer si l'intervalle de temps mesuré est supérieur ou non à une valeur minimale de référence "T".

Dans une forme préférée de réalisation, cette valeur de référence "T" est choisie de manière à s'assurer qu'il y a eu une réelle possibilité de communication et donc d'identification entre le correspondant ayant appelé l'appareillage 0 et l'utilisateur de cet appareillage qui a occasionné une prise de ligne au cours de la phase d'enregistrement de message prévue au profit du correspondant ayant appelé.

La valeur de référence "T" est donc choisie de manière à correspondre à un intervalle de temps suffisamment long, par exemple de l'ordre d'une dizaine de secondes, pour obtenir une forte probabilité d'identification du correspondant ayant appelé par l'utilisateur de l'appareillage 0 appelé au cours de la communication téléphonique directement établie qui suit l'intervention de l'utilisateur.

Si la le comptage de temps "t" écoulée entre la prise de la ligne téléphonique 3 par l'utilisateur et la libération de cette ligne dans les conditions évoquées ci-dessus est inférieure à la valeur de référence "T" choisie, il est considéré qu'il n'a pas été possible qu'une communication suffisante ait été établie entre le correspondant ayant appelé et l'utilisateur ayant pris la ligne au cours de la phase d'enregistrement de message prévue au profit de ce correspondant. Le message reçu jusqu'au moment de l'intervention est alors stocké dans l'appareillage 0 doté de la fonction de répondeur, pratiquement dans les conditions que s'il n'y avait pas eu d'intervention.

Dans l'exemple de réalisation envisagé en liaison avec la figure unique, le processeur de gestion 26B dispose de moyens logiciels et/ou matériels, connus en eux-mêmes, qui assurent la comparaison de la mesure de temps "t" effectuée avec la valeur de référence "T". Ces moyens commandent le stockage permanent par l'agencement de stockage de messages 24 des données numériques fournies par le processeur de traitement de signal 26A à partir des signaux qui ont été émis par le correspondant ayant appelé, après l'émission du signal d'invite par l'appareil répondeur 2, ces signaux numérisés par le convertisseur 25 ayant été par exemple temporairement mémorisés dans l'agencement de stockage 24 après traitement par le processeur de traitement de signal 26A.

Si par contre la mesure de temps "t" écoulée entre la prise de la ligne téléphonique 3 par l'utilisateur et la libération de cette ligne est supérieure à "T", il n'y a pas conservation du message de manière permanente, en l'absence d'ordre en ce sens du processeur de gestion 26B dans la réalisation présentée.

Le procédé de sauvegarde selon l'invention s'insère donc dans un procédé plus général de fonctionnement d'un appareillage 0 dont la fonction de répondeur est en cours d'exploitation. Il est susceptible d'intervenir à partir du moment où un correspondant a appelé l'appareillage 0, via la liaison téléphonique 3 de rattachement de cet appareillage à un central téléphonique et où ce correspondant a reçu un signal d'invite en provenance de l'appareillage, suite à un message d'annonce de l'ouverture d'une telle phase à son profit.

Comme il est connu, le signal d'invite émis par un appareillage à destination d'un correspondant ayant appelé, est le plus généralement suivi dans un délai plus ou moins long par une information signalant une interruption de la communication par ouverture de boucle en ligne par le correspondant, ce dernier ayant, selon son propre choix, transmis ou non un message, via la ligne téléphonique 3, à des fins d'enregistrement. Un stockage permanent des signaux reçus par l'appareillage par l'intermédiaire de la ligne téléphonique 3 depuis l'instant d'émission du signald'invite est usuellement effectué ou éventuellement confirmé dans cet appareillage, dès que ce dernier constate l'interruption de la communication établie par le correspondant ayant appelé.

Comme déjà indiqué cette interruption peut notamment intervenir à l'initiative de l'appareillage, par exemple à la fin du délai autorisé d'enregistrement, ou encore à celle du correspondant ayant appelé, lorsque ce dernier a terminé le message qu'il a voulu faire enregistrer, suite à la réception d'un signal d'invite.

Selon l'invention, si une information signalant une intervention de prise de ligne d'un utilisateur de l'appareillage intervient après l'émission du signal d'invite par cet appareillage, ce dernier lance une phase de surveillance par comptage de temps, à partir d'un instant déterminé qui est par exemple l'instant de début de l'émission du signal d'invite pour déterminer s'il y a ou non libération de la ligne, dans un intervalle de temps déterminé que définit la valeur de référence "T" choisie dans les conditions définies plus haut.

Le stockage permanent des signaux reçus par l'appareillage par l'intermédiaire de la ligne téléphonique 3 depuis l'instant d'émission du signal d'invite est effectué ou éventuellement confirmé dans cet appareillage, dès que ce dernier constate l'interruption de la communication établie entre le correspondant ayant appelé et l'appareillage, alors que le temps "t" mesuré est inférieur à la valeur "T".

Par contre, le stockage permanent n'est plus réalisé ou éventuellement validé, à partir du moment où le temps "t" mesuré dépasse la valeur de référence "T" et qu'il est donc considéré que la communication demandée par le correspondant a été établie avec l'utilisateur ayant pris la ligne au cours de la phase réservée à l'enregistrement de message par le correspondant ayant appelé.

## Revendications

1. Procédé de contrôle de la sauvegarde de l'enregistrement d'un message téléphoné ou radio-téléphoné pour appareillage doté d'une fonction de répondeur, en cas d'intervention d'un utilisateur de l'appareillage pour entrer en communication avec un correspondant, ayant préalablement appelé l'appareillage, après une émission par cet appareillage d'un signal caractéristique d'invite signalant le début d'une phase d'enregistrement au profit dudit correspondant, caractérisé en ce qu'il comporte une phase de surveillance, déclenchée à partir de l'instant d'intervention d'un utilisateur de l'appareillage en vue d'entrer en communication avec le correspondant, pour déterminer s'il y a interruption de la communication avant écoulement d'un temps déterminé correspondant à une valeur de référence "T" fixée et pour en conséquence n'effectuer ou éventuellement ne valider un stockage permanent des signaux reçus du correspondant par l'appareillage, après l'émission du signal d'invite par cet appareillage et jusqu'à l'interruption de la communication, que si cette interruption intervient dans un temps inférieur ou au plus égal à la valeur de référence "T", après l'intervention d'un utilisateur.

2. Dispositif pour le contrôle de la sauvegarde d'un message téléphoné ou radio-téléphoné par un correspondant et en cours de réception pour enregistrement par un appareillage doté d'une fonction de répondeur, en cas d'intervention d'un utilisateur de l'appareillage pour entrer en communication avec le correspondant, après une émission par l'appareillage d'un signal d'invite destiné à signaler le début d'une phase d'enregistrement au correspondant, au profit de ce dernier, et avant une interruption de la communication établie entre ce correspondant et l'appareillage, caractérisé en ce qu'il comporte des moyens logiciels et/ou matériels (26) pour commander une mesure de temps, à partir de l'instant d'une intervention d'un utilisateur de l'appareillage en vue d'entrer en communication avec le correspondant ayant appelé et pour commander la sauvegarde, dans un agencement de stockage (24), du message, constitué par les signaux reçus de ce correspondant par l'appareillage après l'émission d'un signal d'invite par ce dernier et jusqu'à l'interruption de la communication, si cette interruption intervient dans un délai inférieur ou au plus égal à une valeur de référence "T" fixée, après l'instant d'intervention de l'utilisateur.

3. Appareillage doté d'une fonction de répondeur, caractérisé en ce qu'il comporte un dispositif selon la revendication 2.

4. Appareillage selon la revendication 3, relié à une ligne téléphonique (3) et caractérisé en ce que le dispositif pour le contrôle de la sauvegarde de message qu'il comporte, exploite:
- des moyens logiciels et/ou matériels (22, 26, 28) pour détecter l'envoi d'un signal d'invite, l'intervention d'un utilisateur par prise de la ligne téléphonique, au cours d'une communication entre l'appareillage et un correspondant ayant appelé par l'intermédiaire de la ligne téléphonique, et l'interruption d'une communication téléphonique établie par l'intermédiaire de cette même ligne téléphonique;
- des moyens pour comparer à une valeur de référence "T" le temps s'écoulant entre une intervention par prise de ligne au niveau de l'appareillage, après l'émission d'un signal d'invite par cet appareillage sur la ligne téléphonique, et une interruption de la communication alors établie via cette ligne téléphonique;
- des moyens pour intervenir sur l'enregistrement, dans un agencement de stockage (24) de l'appareillage, des signaux reçus par l'appareillage, via la ligne téléphonique, après une émission par cet appareillage d'un signal d'invite et jusqu'à interruption de la communication jusqu'alors établie via cette ligne.
